# EUROPÄISCHE PATENTSCHRIFT

(11) **EP 1 194 202 B1**
(45) Veröffentlichungstag und Bekanntmachung des Hinweises auf die Patenterteilung: **12.03.2003**
(21) Anmeldenummer: 00943647.8
(22) Anmeldetag: 30.05.2000
(51) Int. Cl.: B01D 27/00, B01D 27/06, B01D 27/08, B01D 35/31

(54) **WEGWERF-FILTER FÜR KRAFTSTOFF**
DISPOSABLE FILTER FOR FUEL
FILTRE JETABLE POUR CARBURANT

(30) Priorität: 01.06.1999 DE 19925098
(43) Veröffentlichungstag der Anmeldung: 10.04.2002
(73) Patentinhaber: ROBERT BOSCH GMBH, 70442 Stuttgart (DE)
(72) Erfinder: ZORZIN, Luciano, 28042 Madrid (ES); TORREMOCHA, Eugenio Fernandez, 28033 Madrid (ES); BAZ, Alfonso, 28015 Madrid (ES)
(86) Internationale Anmeldenummer: DE0001746
(87) Internationale Veröffentlichungsnummer: WO00072938

(56) Entgegenhaltungen:
- DE-A- 2 213 874
- DE-A- 3 423 274
- DE-A- 3 923 476
- DE-A- 4 416 577
- US-A- 4 361 483
- US-A- 5 290 445

## Beschreibung

### Stand der Technik

Die Erfindung geht aus von einem Wegwerf-Filter für Kraftstoff nach der im Oberbegriff des Anspruchs 1 näher angegebenen Gattung.

Aus der DE 22 13 874 A1 ist bereits ein solches Wegwerf-Filter für Kraftstoff bekannt, das als Leitungsfilter ausgebildet ist und ein Gehäuse aus Kunststoff aufweist. Das Gehäuse besteht aus einem becherförmigen Gehäuseteil und einem zugehörigen Deckel, die an ihren Rändern unlösbar miteinander verbunden sind. Im Inneren des Kunststoff-Gehäuses ist ein radial durchströmter, sternförmiger Filtereinsatz aus Filterpapier angeordnet, der an seinem einen stirnseitigen Ende durch eine Endkappe abgedichtet ist, deren Material nicht näher angegeben ist. Mit seinem anderen stirnseitigen Ende ist der Filtereinsatz unmittelbar am Deckel befestigt, indem er dort in eine ringförmige Vertiefung zwischen einem Anschlußstutzen und einer ringförmig verlaufenden Rippe ragt und durch einen kalt aushärtenden, fließfähigen Klebstoff befestigt ist, der zugleich die Funktion der Endkappe mit übernimmt. Mit diesem Klebstoff werden zugleich auch die Ränder von becherförmigem Gehäuseteil und Deckel in unlösbarer Weise dicht und fest miteinander verbunden. Obwohl dieses Filter relativ einfach und kostengünstig baut und als Wegwerf-Filter konzipiert ist, hat es doch den Nachteil, daß es sich für eine thermische Entsorgung durch Verbrennen weniger eignet. So können bei den dort verwendeten Materialien für Kunststoff, Klebstoff und Endkappe beim Verbrennen umweltschädliche Abgase entstehen, die eine thermische Entsorgung verhindern. Ferner ist es von Nachteil, daß für die Sicherheit der Verklebung von Gehäuseteil und Deckel eine relativ aufwendig bauende Zugentlastung vorgesehen ist, bei der elastische Krallen am Deckel einen äußeren Ringwulst am becherförmigen Gehäuseteil hintergreifen.

Ferner ist aus der DE 44 16 577 A1 ein Flüssigkeitsfilter für Kraftstoffe bekannt, das einen austauschbaren Filtereinsatz aufweist, der ohne Verwendung von Metallteilen auskommt und umweltfreundlich thermisch entsorgbar ist. Dabei werden als Materialien für den Filtereinsatz Kunststoffpolyamid, Papier, Baumwolle, Filz oder Kunststoffvlies verwendet, so daß der Filtereinsatz nach Ablauf seiner Einsatzzeit so entsorgt werden kann, daß praktisch keine Rückstände nach dem Verbrennen verbleiben, und auch umweltschädliche Abgase möglichst vermieden werden. Dieser Filtereinsatz kann nach seinem bestimmungsgemäßen Gebrauch einer Müllverbrennung zugeführt werden, wobei nach seiner Verbrennung praktisch keine zu deponierenden Rückstände verbleiben. Von Nachteil bei dieser Bauart ist, daß sie sich nicht für ein Wegwerf-Filter eignet, da das Filter ein relativ aufwendiges Gehäuse aus Aluminium aufweist und zudem der Filtereinsatz so aufgebaut ist, daß er einen wiederverwendbaren Stützkörper in seinem Inneren aufnimmt.

### Vorteile der Erfindung

Das erfindungsgemäße Wegwerf-Filter für Kraftstoff mit den kennzeichnenden Merkmalen des Hauptanspruchs hat demgegenüber den Vorteil, daß das Filter relativ einfach und kostengünstig baut und nach seinem bestimmungsgemäßen Gebrauch umweltfreundlich thermisch entsorgbar ist. Das Filter kann als Ganzes der Müllverbrennung zugeführt werden, wobei durch die verwendeten Materialien nach seiner Verbrennung praktisch keine zu deponierenden Rückstände verbleiben. Dabei kann der Kunststoff des Filters anstelle von Heizöl als Brennstoff genutzt werden.

Durch die in den Unteransprüchen aufgeführten Maßnahmen sind vorteilhafte Weiterbildungen und Verbesserungen des im Anspruch 1 angegebenen Wegwerf-Filters möglich. So ist es besonders vorteilhaft, wenn zur Erhöhung der Festigkeit des Gehäuses dessen Kunststoff mit Glasfasern verstärkt wird, wobei sich ein Anteil von 25% Glasfasern als besonders günstig erwiesen hat. Ferner ist es vorteilhaft, wenn gemäß den Ansprüchen 3 und 4 als Kunststoff für das Gehäuse ein Polyamid PA66, das auch als Nylon bezeichnet wird, verwendet wird, während sich für die Endkappen in zweckmäßiger Weise ein Polyamid PA6, das auch als Perlon bezeichnet wird, verwendbar ist. Eine günstige Verbindung zwischen Gehäuseteil und Deckel läßt sich erreichen, wenn gemäß Anspruch 5 eine Schweißstelle an deren Rändern durch Ultraschallschweißung ausgeführt wird. Besonders vorteilhaft für die Stabilität und für den Gebrauchswert des Filters ist, wenn diese unlösbare Verbindungsstelle im Gehäuse gemäß den Ansprüchen 6 bis 8 ausgeführt wird, was auch die Herstellung des Filters erleichtert. In besonders zweckmäßiger Weise läßt sich das Filter gemäß Anspruch 9 als Leitungsfilter ausbilden, wobei beide Anschlußstutzen für Zulauf und Ablauf an den entgegengesetzten Enden des Gehäuses angeordnet sind. Ebenso vorteilhaft ist es, wenn das Filter gemäß den Ansprüchen 10 und 11 als Boxfilter ausgeführt wird, so daß beide Anschlüsse im Deckel liegen. Weitere vorteilhafte Ausgestaltungen ergeben sich aus den übrigen Ansprüchen, der Beschreibung sowie der Zeichnung.

### Zeichnung

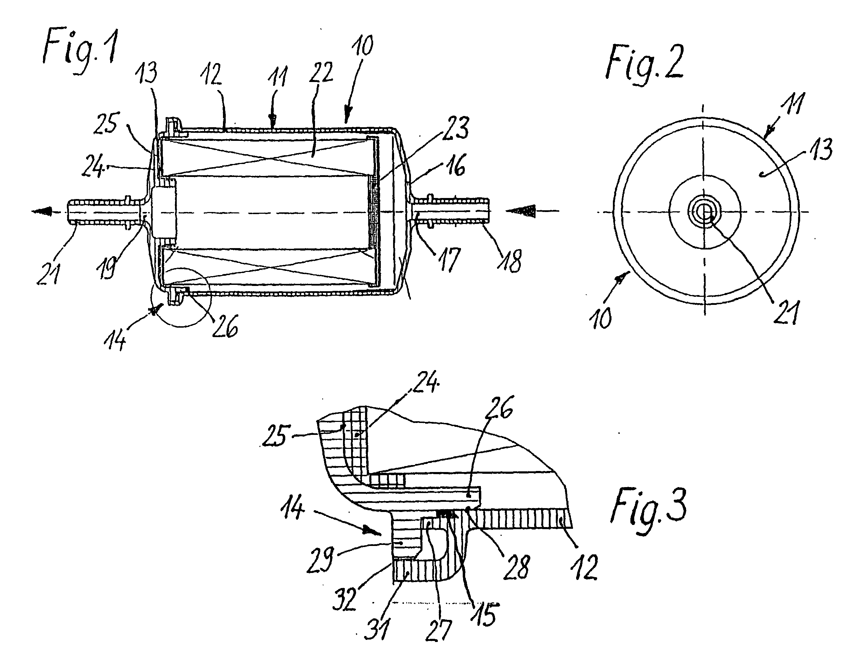

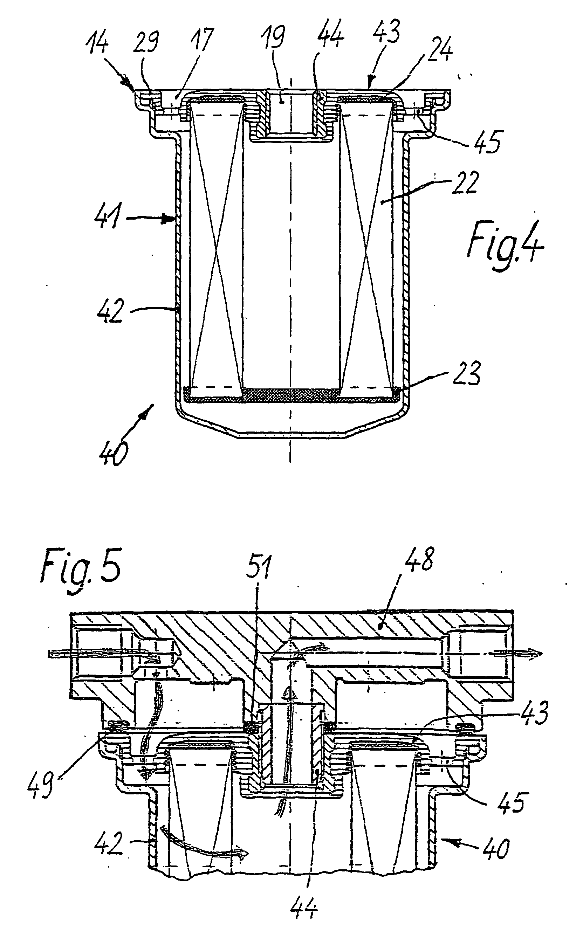

Zwei Ausführungsbeispiele der Erfindung sind in der Zeichnung dargestellt und in der nachfolgenden Beschreibung näher erläutert. Es zeigen Figur 1 einen Längsschnitt durch ein Wegwerf-Filter in einer ersten Ausführungsform als Leitungsfilter, Figur 2 eine Seitenansicht des Filters nach Figur 1 und Figur 3 als Einzelheit von Figur 1 die Verbindungsstelle im Gehäuse im vergrößerten Maßstab, Figur 4 einen Längsschnitt durch ein Wegwerf-Filter in einer zweiten Ausführungsform als Boxfilter und Figur 5 einen Teil des Boxfilters nach Figur 4 angebaut an eine Anschlußplatte.

### Beschreibung der Ausführungsbeispiele

Die Figur 1 zeigt in vereinfachter Darstellung einen Längsschnitt durch ein Wegwerf-Filter 10, das hier als Leitungsfilter ausgebildet ist. Das Filter 10, das zum Reinigen von Kraftstoff verwendet wird, hat ein Gehäuse 11 aus Kunststoff. Dieses Gehäuse 11 besteht aus einem zylindrischen, becherförmigen Gehäuseteil 12, das an seinem offenen Ende durch einen Deckel 13 verschlossen ist. Gehäuseteil 12 und Deckel 13 sind an ihren Rändern im Bereich einer Verbindungsstelle 14 untrennbar und dicht und fest miteinander verbunden, wobei dies zweckmäßig durch eine Schweißstelle 15 erfolgt, die durch Ultraschallschweißen hergestellt ist.

Wie die Figur 1 in Verbindung mit Figur 2 näher zeigt, weist das becherförmige Gehäuseteil 12 eine zylindrische Form auf und hat in einem Boden 16 einen ersten Anschluß 17 für einen Zulauf, der für den Leitungsfilter zweckmäßig als Anschlußstutzen 18 ausgeführt ist. Koaxial zum Anschluß 17 ist im Deckel 13 ein entsprechender Anschluß 19 mit einem Anschlußstutzen 21 für den Ablauf ausgeführt. Im Inneren des Gehäuses 11 ist zwischen die Anschlüsse 17, 19 ein radial durchströmter, sternförmiger Filtereinsatz 22 geschaltet, der zweckmäßigerweise aus Papier hergestellt ist. An seinem frei auskragenden Ende ist dieser Filtereinsatz 22 stirnseitig in an sich bekannter Weise durch eine plattenförmige Endkappe 23 verschlossen. Am anderen stirnseitigen Ende des Filtereinsatzes 22 ist eine ringförmige Endkappe 24 ausgebildet, die sowohl den Filtereinsatz 22 stirnseitig abdichtet und zugleich den Filtereinsatz 22 am Deckel 13 dicht befestigt. Zu diesem Zweck ragt der Filtereinsatz 22 in eine ringförmige Vertiefung 25 des Deckels 13, die sich zwischen dem Anschluß 19 und einem hülsenförmigen Randabschnitt 26 des Deckels 13 erstreckt.

Bei vorliegendem Wegwerf-Filter 10 bestehen nun die beiden Teile des Gehäuses 11 sowie beide Endkappen 23, 24 aus Kunststoff, wobei für die beiden Endkappen 23 und 24 das Polyamid PA6 verwendet wird, das auch unter dem Namen Perlon bekannt ist, während für das Gehäuseteil 12 und den Deckel 13 das Polyamid PA66 verwendet wird, das auch unter dem Namen Nylon bekannt ist. Zudem ist das Polyamid des Gehäuses 11 noch glasfaserverstärkt, wobei der Anteil der Glasfasern vorzugsweise eine Größe von ca. 25% erreicht. Auf diese Weise werden vor allem die Stabilität und Strapazierfähigkeit des Gehäuses 11 erhöht und somit die mechanischen und chemischen Eigenschaften des Wegwerf-Filters 10 verbessert.

Die Figur 3 zeigt als Einzelheit in vergrößertem Maßstab die Verbindungsstelle 14 nach Figur 1, woraus besonders deutlich erkennbar ist, daß eine doppelte Führung und Abstützung in der Verbindungsstelle 14 vorgesehen ist. So wird der hülsenförmige Randabschnitt 26 des Deckels 13 an seinem Außenumfang von einem auslaufenden Innenrand 27 umschlossen, so daß sich zwischen beiden Rändern eine erste, zylindrische Führungsfläche 28 ausbildet, in der auch die Schweißstelle 15 angeordnet ist.

Der Deckel 13 weist im Bereich des hülsenförmigen Randabschnitts 26 einen radial nach außen ragenden Ringsteg 29 auf, an dessen Außenumfang ein auskragender Ringwulst 31 des Gehäuseteils 12 anliegt. Zwischen dem außenliegenden Ringwulst 31 und dem innenliegenden Ringsteg 29 erstreckt sich somit eine zweite, zylindrische Führungsfläche 32, die in radialem Abstand von der ersten Führungsfläche 28 liegt und somit einen größeren Durchmesser als die erste Führungsfläche 28 aufweist. Mit dem auslaufenden Innenrand 27 stößt das becherförmige Gehäuseteil 12 am radialen Ringsteg 29 an, so daß beide Teile beim Zusammenbau in axialer Richtung festgelegt sind. Die durch Ultraschallschweißen hergestellte Schweißnaht 15 ist somit von außen geschützt und ermöglicht eine stabile, feste und dichte Verbindung. Insgesamt sorgt die Verbindungsstellung 14 auf diese Weise für ein robustes und strapazierfähiges Gehäuse 11.

Durch diese Ausgestaltung des Wegwerfs-Filters 10 wird eine umweltfreundliche Bauweise des Filters erreicht. Durch die Ausbildung des Gehäuses 11 sowie der beiden Endkappen 23, 24 aus Polyamid sowie des Filtereinsatzes aus einem Papier läßt sich eine mechanisch ausreichend stabile Bauweise und eine chemische Widerstandsfähigkeit gegen die meisten zu filternden Medien erreichen, wobei anschließend das Filter 10 nach seinem bestimmungsgemäßen Gebrauch umweltschonend thermisch entsorgt werden kann. Bei einer Entsorgung über die Müllverbrennung wird das verwendete Polyamid als Brennstoff ausgenutzt, wobei die Glasfasern nur zu einem relativ geringen, leicht entsorgbaren Rückstand führen. Irgendwelche zusätzlichen Metallteile erübrigen sich bei dieser Bauweise des Filter 10; durch die besondere Ausbildung der Verbindungsstelle 14 in Verbindung mit dem glasfaserverstärkten Polyamid erreicht das Gehäuse 11 eine große mechanische Stabilität und Widerstandsfähigkeit, so daß es den beim Filtern von Kraftstoffen auftretenden Belastungen standhalten kann.

Die Wirkungsweise des Wegwerf-Filter 10 entspricht vergleichbar aufgebauten Filtern und ist an sich bekannt. Der zu reinigende Kraftstoff wird über den Zulauf-Anschluß 17 in das Innere des Gehäuses 11 geführt, durchströmt dort radial von außen nach innen den Filtereinsatz 22, der an seinen beiden Stirnseiten durch die Endkappen 23 und 24 abgedichtet ist. Der gereinigte Kraftstoff kann von der Innenseite des Filtereinsatzes 22 über den Ablauf-Anschluß 19 in gewohnter Weise abströmen.

Die Figur 4 zeigt einen Längsschnitt durch ein zweites Wegwerf-Filter 40, das hier im Unterschied zu demjenigen nach Figur 1 als Boxfilter ausgeführt ist. Dieses Boxfilter 40 unterscheidet sich vom Filter 10 nach Figur 1 wie folgt, wobei für gleiche Bauelemente gleiche Bezugszeichen verwendet werden.

Das Boxfilter 40 hat ein anderes Gehäuse 41 bei dem das becherförmige Gehäuseteil 42 durch einen Deckel 43 verschlossen ist, in dem die Anschlüsse 17 und 19 für Zulauf bzw. Ablauf integriert sind. Dabei ist der Anschluß 19 für den Ablauf zentral im Deckel 43 angeordnet, wobei zur Befestigung des Boxfilters 40 an einem Maschinenelement eine Gewindehülse 44 in den Deckel 43 eingeformt ist. Radial außerhalb der Vertiefung 25 für den Filtereinsatz 22 ist nun im Deckel 43 der Anschluß 17 für den Zulauf ausgebildet, wozu mehrere Öffnungen 45 auf einem gemeinsamen Durchmesser gleichmäßig verteilt im Deckel 43 angeordnet sind. Die doppelwandige Ausführung der Verbindungsstellen 14 entspricht derjenigen beim Filter 10 nach Figur 1. Insgesamt erhält damit der Deckel 43 eine relativ flache aber im Durchmesser etwas vergrößerte Bauweise. Auch hier sind Gehäuseteil 42 und Deckel 43 aus Polyamid PA66 hergestellt, während zum Abdichten und Befestigen des Filtereinsatzes 22 das Polyamid PA6 verwendet wird.

Die Figur 5 zeigt im Schnitt einen Teil des Boxfilters 40 nach Figur 4, das an eine geeignete Anschlußplatte 48 angeschraubt wird. Die Abdichtung der Kraftstoffseite nach außen übernimmt dabei ein außenliegender O-Ring 49, während die Abdichtung zwischen Schmutz- und Reinseite ein innenliegender O-Ring übernimmt. Auch das Boxfilter 40 ist damit so aufgebaut, daß es durch die in ihm verwendeten Materialien umweltschonend entsorgt werden kann, da es als Ganzes umweltschonend verbrannt werden kann.

Selbstverständlich sind an den gezeigten Ausführungsformen Änderungen möglich, ohne vom Gedanken der Erfindung abzuweichen. Bei dem Boxfilter 40 kann die Gewindehülse 44 je nach Bedarf aus einem Kunststoff oder aus Metall hergestellt werden, zumal sie nur ein relativ kleines Bauvolumen aufweist. Die Anordnung der O-Ringe kann bei der Filterbox 40 beliebig gewählt werden, so daß beide Dichtringe in der Anschlußplatte oder in der Filterbox oder in beiden Bauelementen gehalten sind. Die in der Figur 1 dargestellte Bauweise des Leitungsfilters stellt eine besonders vorteilhafte Kombination dar. Bei Bedarf ist es aber auch möglich, die ringförmige Endkappe am Filtereinsatz losgelöst vom eigentlichen Deckel herzustellen und die Abdichtung zwischen Schmutz- und Reinseite sowie die Halterung des Filtereinsatzes dadurch zu erreichen, daß eine geeignete Steckverbindung zwischen Deckel- und Filtereinsatz vorgesehen wird.

## Patentansprüche

1. Wegwerf-Filter für Kraftstoff mit einem aus Kunststoff bestehenden Gehäuse, bei dem ein becherförmiges Gehäuseteil an seinem offenen Ende durch einen Deckel verschlossen ist, wobei deren Ränder in unlösbarer Weise dicht und fest miteinander verbunden sind und mit einem im Inneren des Gehäuses angeordneten, radial durchströmten Filtereinsatz, der zwischen zwei im Gehäuse angeordneten Anschlüssen für Zulauf und Ablauf geschaltet ist und dazu an seinem einen Ende eine geschlossene Endkappe trägt, während er mit seinem anderen Ende in eine ringförmige Vertiefung des Deckels ragt und dort durch eine ringförmige Endkappe dicht und fest mit dem Deckel verbunden ist, **dadurch gekennzeichnet, daß** die beiden Endkappen (23, 24) und das Gehäuse (11, 41) als Kunststoffteile ausgebildet sind und aus Polyamid bestehen, wodurch das Filter (10, 40) als Ganzes umweltfreundlich thermisch entsorgbar ist und daß die miteinander verbundenen Ränder (27, 26) von Gehäuseteil (12, 42) und Deckel (13, 43) an zwei zylindrischen Führungsflächen (28, 32) aneinander grenzen, die zueinander konzentrisch und radial im Abstand voneinander liegen und von denen an der innenliegenden, durchgehenden Führungsfläche (28) eine die beiden Ränder von Gehäuseteil (12, 42) und Deckel (13, 43) dicht und fest miteinander verbindende Schweißstelle (15) angeordnet ist.

2. Wegwerf-Filter nach Anspruch 1, **dadurch gekennzeichnet, daß** das Gehäuseteil (12, 42) mit seinem auslaufenden Innenrand (27) im Bereich der ersten Führungsfläche (28) einen hülsenförmigen Randabschnitt (26) des Deckels (13) umgreift und der Deckel (13) am Randabschnitt (26) einen radial nach außen ragenden Ringsteg (29) aufweist, der im Bereich der zweiten Führungsfläche (32) an einem auskragenden Ringwulst (31) des Gehäuseteile (12) anliegt.

3. Wegwerf-Filter nach Anspruch 2, **dadurch gekennzeichnet, daß** der radiale Ringsteg (29) als axialer Anschlag für das becherförmige Gehäuseteil (12, 42) dient.

4. Wegwerf-Filter nach einem der Ansprüche 1 bis 3, **dadurch. gekennzeichnet, daß** der Kunststoff des Gehäuses (11, 41) mit Glasfasern verstärkt ist, insbesondere einen Anteil von ca. 25% Glasfasern enthält.

5. Wegwerf-Filter nach einem der Ansprüche 1 bis 4, **dadurch gekennzeichnet, daß** als Kunststoff für das Gehäuse (11, 41) ein Polyamid PA66 verwendet wird.

6. Wegwerf-Filter nach einem der Ansprüche 1 bis 5, **dadurch gekennzeichnet, daß** als Kunststoff für die beiden Endkappen (23, 24) ein Polyamid PA6 verwendet wird.

7. Wegwerf-Filter nach einem der Ansprüche 1 bis 6, **dadurch gekennzeichnet, daß** die Schweißstelle (15) als Ultraschallschweißung ausgeführt ist.

8. Wegwerf-Filter nach einem der Ansprüche 1 bis 7, **dadurch gekennzeichnet, daß** das Filter als Leitungsfilter (10) ausgebildet ist, an dessen Gehäuseteil (12) und Deckel (13) jeweils koaxial zueinander die Anschlüsse (17, 19) für Zulauf und Ablauf, insbesondere als Anschlußstutzen (18, 21), angeordnet sind.

9. Wegwerf-Filter nach einem der Ansprüche 1 bis 7, **dadurch gekennzeichnet, daß** das Filter als Boxfilter (40) ausgebildet ist, in dessen Deckel (43) die beiden Anschlüsse (17, 19) für Zulauf und Ablauf angeordnet sind.

10. Wegwerf-Filter nach Anspruch 9, **dadurch gekennzeichnet, daß** von den beiden Anschlüssen (17, 19) einer (19) zentral im Deckel (43) und mit Anschlußgewinde (44) ausgeführt ist, während der andere Anschluß (17) durch mehrere Öffnungen (45) gebildet wird, die außerhalb der ringförmigen Vertiefung (25) im Deckel (43) auf einem gemeinsamen Durchmesser verteilt angeordnet sind.

11. Wegwerf-Filter nach einem der Ansprüche 1 bis 10, **dadurch gekennzeichnet, daß** der Filtereinsatz (22) aus Papier besteht und sternförmig ist.

## Claims

1. Disposable filter for fuel, with a plastic housing, in which a bowl-shaped housing part is closed at its open end by means of a cover, their edges being unreleasably connected to one another sealingly and firmly, and with a radial-throughflow filter insert which is arranged inside the housing and which is inserted between two connections for inflow and outflow, arranged in the housing, and, for this purpose, carries at one end a closed end cap, whilst it projects with its other end into an annular depression of the cover and is connected to the cover there sealingly and firmly by means of an annular end cap, **characterized in that** the two end caps (23, 24) and the housing (11, 41) are produced as plastic parts and consist of polyamide, with the result that the filter (10, 40) can be disposed of thermally as a whole in an environmentally friendly manner, and **in that** the interconnected edges (27, 26) of the housing part (12, 42) and of the cover (13, 43) are contiguous to one another at two cylindrical guide faces (28, 32) which lie concentrically to one another and radially at a distance from one another and on the inner continuous guide face (28) of which is arranged a weld (15) connecting the two edges of the housing part (12, 42) and of the cover (13, 43) to one another sealingly and firmly.

2. Disposable filter according to Claim 1, **characterized in that** the housing part (12, 42) surrounds with its terminating inner edge (27), in the region of the first guide face (28), a sleeve-shaped edge portion (26) of the cover (13), and the cover (13) has, on the edge portion (26), a radially outward-projecting annular web (29) which, in the region of the second guide face (32), bears against a projecting annular bead (31) of the housing part (12).

3. Disposable filter according to Claim 2, **characterized in that** the radial annular web (29) serves as an axial stop for the bowl-shaped housing part (12, 42).

4. Disposable filter according to one of Claims 1 to 3, **characterized in that** the plastic of the housing (11, 41) is reinforced with glass fibres, in particular contains a fraction of approximately 25% glass fibres.

5. Disposable filter according to one of Claims 1 to 4, **characterized in that** the plastic used for the housing (11, 41) is a polyamide PA66.

6. Disposable filter according to one of Claims 1 to 5, **characterized in that** the plastic used for the two end caps (23, 24) is a polyamide PA6.

7. Disposable filter according to one of Claims 1 to 6, **characterized in that** the weld (15) is produced as an ultrasonic weld.

8. Disposable filter according to one of Claims 1 to 7, **characterized in that** the filter is designed as a line filter (10), on the housing part (12) and cover (13) of which are arranged, in each case coaxially to one another, the connections (17, 19) for inflow and outflow, in particular as connection pieces (18, 21).

9. Disposable filter according to one of Claims 1 to 7, **characterized in that** the filter is designed as a box filter (40), in the cover (43) of which are arranged the two connections (17, 19) for inflow and outflow.

10. Disposable filter according to Claim 9, **characterized in that**, of the two connections (17, 19), one (19) is formed centrally in the cover (43) and with a connecting thread (44), whilst the other connection (17) is formed by a plurality of orifices (45) which are arranged, distributed on a common diameter, outside the annular depression (25) in the cover (43).

11. Disposable filter according to one of Claims 1 to 10, **characterized in that** the filter insert (22) consists of paper and is star-shaped.

## Revendications

1. Filtre jetable pour carburant avec un boîtier constitué de matériau synthétique pour lequel une partie de boîtier en forme de coupe est fermée à son extrémité ouverte par un couvercle, ses bords étant liés l'un à l'autre de façon indétachable, étanche et solide et avec une cartouche filtrante placée à l'intérieur du boîtier, traversée radialement par le courant, et qui est branchée entre deux raccordements placés dans le boîtier pour l'amenée et pour l'écoulement et qui à cet effet porte à l'une de ses extrémités un chapeau terminal fermé tandis qu'avec son autre extrémité elle dépasse dans un renfoncement annulaire du couvercle et y est liée de façon solide et étanche par un chapeau terminal annulaire,
**caractérisé en ce que**
les deux chapeaux terminaux (23, 24) et le boîtier (11, 41) sont formés en tant que pièces en matériau synthétique et sont en polyamide, grâce à quoi le filtre (10, 40) peut être éliminé thermiquement comme un tout de façon compatible avec l'environnement, et les bords (27, 26) liés l'un à l'autre de la partie de boîtier (12, 42) et du couvercle (13, 43) avoisinent deux surfaces de guidage (28, 32) cylindriques qui sont disposées concentriquement et radialement l'une par rapport à l'autre et à distance l'une de l'autre et à partir desquelles, sur la surface de guidage (28) traversante située à l'intérieur, est placée une soudure (15) qui lie de façon étanche et solide l'un à l'autre les deux bords de la partie de boîtier (12, 42) et du couvercle (13, 43).

2. Filtre jetable selon la revendication 1,
**caractérisé en ce que**
la partie de boîtier (12, 42) dans la zone de la première surface de guidage (28) enveloppe avec son bord intérieur en saillie (27) un segment de bord (26) en forme de manchon du couvercle (13), et le couvercle (13) sur le segment de bord (26) présente une nervure annulaire (29), en saillie radialement vers l'extérieur, qui dans la zone de la deuxième surface de guidage (32) s'appuie sur un bord annulaire (31) en surplomb de la partie de boîtier (12).

3. Filtre jetable selon la revendication 2,
**caractérisé en ce que**
la nervure annulaire (29) radiale sert de butée axiale pour la partie de boîtier (12, 42) en forme de coupe.

4. Filtre jetable selon l'une des revendications 1 à 3,
**caractérisé en ce que**
le matériau synthétique du boîtier (11, 41) est renforcé de fibres de verre, en particulier contient une proportion d'environ 25 % de fibres de verre.

5. Filtre jetable selon l'une des revendications 1 à 4,
**caractérisé en ce qu'**
on utilise en tant que matériau synthétique pour le boîtier (11, 41) un polyamide PA66.

6. Filtre jetable selon l'une des revendications 1 à 5,
**caractérisé en ce qu'**
on utilise en tant que matériau synthétique pour les deux chapeaux terminaux (23, 24) un polyamide PA6.

7. Filtre jetable selon l'une des revendications 1 à 6,
**caractérisé en ce que**
la soudure (15) est réalisée par soudage par ultrasons.

8. Filtre jetable selon l'une des revendications 1 à 7,
**caractérisé en ce que**
le filtre est formé en tant que filtre en ligne (10), en plaçant chaque fois sur son boîtier (12) et sur son couvercle (13) coaxialement l'un par rapport à l'autre les raccordements (17, 19) pour l'amenée et pour l'écoulement, en particulier en tant qu'ajutages (18, 21).

9. Filtre jetable selon l'une des revendications 1 à 7,
**caractérisé en ce que**
le filtre est formé en tant que filtre-boîtier (40) dans le couvercle duquel sont placés les deux raccordements (17, 19) pour l'amenée et pour l'écoulement.

10. Filtre jetable selon la revendication 9,
**caractérisé en ce que**
des deux raccordements (17, 19) l'un (19) est réalisé centralement dans le couvercle (43) avec un raccordement fileté (44), tandis que l'autre raccordement (17) est formé par plusieurs ouvertures (45) qui sont placées dans le couvercle (43) en étant régulièrement réparties sur un diamètre commun à l'extérieur du renfoncement (25) annulaire.

11. Filtre jetable selon l'une des revendications 1 à 10,
**caractérisé en ce que**
la cartouche filtrante (22) est en papier et a une forme en étoile.
